# EUROPEAN PATENT SPECIFICATION

(11) **EP 3 299 754 B1**
(45) Date of publication and mention of the grant of the patent: **24.03.2021**
(21) Application number: 17193417.7
(22) Date of filing: 27.09.2017
(51) Int. Cl.: F25D 23/06, H02B 1/30, H02B 1/01, F16B 5/01, B65D 6/00, E04B 1/343, E04B 1/61, E04B 2/74, F16B 5/00

(54) **CONNECTION ELEMENTS FOR PANELS**
VERBINDUNGSELEMENTE FÜR PANEELE
ÉLÉMENTS DE CONNEXION POUR PANNEAUX

(30) Priority: 27.09.2016 IT 201600096771
(43) Date of publication of application: 28.03.2018
(73) Proprietor: M.P.M. S.R.L., 35010 Santa Giustina in Colle (PD) (IT)
(72) Inventor: MASON, Luca, 35010 Loreggia (PD) (IT)
(74) Representative: Morabito, Sara

(56) References cited:
- DE-A1- 10 050 312
- DE-U1- 7 637 513
- DE-U1- 8 138 352
- FR-A1- 2 448 239
- FR-A1- 2 881 801

## Description

### Technical field

The present invention relates to a connection element for connecting to each other at least two panels of a modular structure which are positioned perpendicularly to each other Such a connection element is disclosed for example in patent application FR 2881801 A.

The invention further relates to a modular structure which is formed by a plurality of walls, wherein two contiguous walls which are perpendicular to each other are connected to each other by means of a connection element constructed according to the invention.

### Technological background

The connection element according to the invention is particularly though not exclusively used in the technical field of production and assembly of modular structures which are formed so as to define at least one room, for example, insulated or refrigerating cells.

Typically, the refrigerating cells are produced by assembling a plurality of panels of thermally insulating expanded polyurethane. The polyurethane is usually covered by two sheets of metal material which delimit the larger surfaces of the panel.

The panels which form the walls of the refrigerating cells are connected to each other by means of suitable connectors or joint elements which are intended to comply mainly with functional requirements, such as speed of assembly, solidity and efficacy of connection of the panels and thermal insulation.

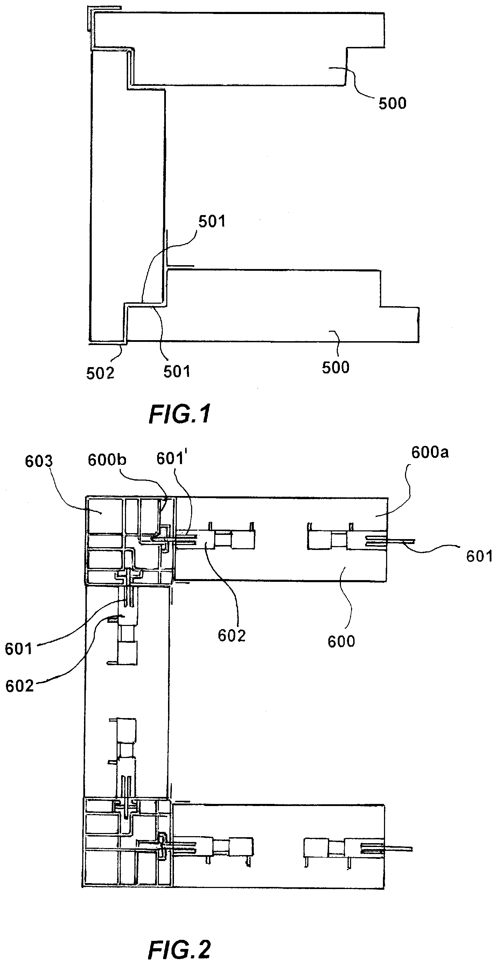

According to a first connection system of the prior art, shown in Figure 1, in order to connect the panels 500 of two contiguous walls which are perpendicular to each other, it is provided for suitably shaping the facing longitudinal edges 501 of the two panels 500 so that they are connected to each other with a form-fitting connection.

Advantageously, the edges 501 to be connected are shaped so as to have a stepped profile.

There is further provision for interposing a laminar joint element 502 between the facing edges of the two contiguous panels in order to make the mutual connection thereof stable.

This solution is subject to a high cost of production of the panels since they have to be suitably shaped and cut to size.

Furthermore, these panels have to be constructed with dimensions which correspond to the walls of the structure which is intended to be assembled.

In addition, the presence of the joint element promotes the occurrence of thermal bridges at the joint element of the two contiguous panels.

According to another solution which is known in the field of modular structures, as illustrated in Figure 2, each panel 600 of the structure to be assembled is provided at the opposing longitudinal edges 600a, 600b thereof with engaging elements 601 and engaging recesses 602, respectively. In particular, each panel 600 is provided at a first longitudinal edge 600a with a plurality of engaging elements 601 which project from the edge 600a of the panel 600 and which are suitably spaced apart over the longitudinal extent of the edge 600a, and at a second longitudinal edge 600b, opposite the first edge 600a, with engagement seats 602 which are suitably spaced apart over the longitudinal extent of the edge 600b and which are intended to receive and retain the engaging elements 601.

In order to form the walls of the refrigerating cell, it is provided for placing two panels side by side and inserting the engaging elements of one panel in the corresponding engagement seats of another panel.

A drawback of this system is that a high level of precision is required during the production of the panels so that engaging elements and engagement seats are mutually corresponding.

Therefore, the costs of this system are high and furthermore the connection operations are laborious and the assembly times of the modular structure are high.

Furthermore, in this case, it is also necessary to produce the single panels with a size corresponding to the dimensions of the wall which is intended to be produced.

Furthermore, with this system, in order to produce the structure by engaging walls which are positioned perpendicularly to each other, there is provision for using angular elements 603 which constitute the corners of the cell to be formed and which are intended to be connected to two panels which are perpendicular to each other.

Each angular element 603 is provided at the two opposing walls with engaging elements 601 and engagement seats 602, respectively, for allowing the stable engagement of the two perpendicular panels 600.

The assembly of perpendicular walls with this system is particularly laborious for the reasons indicated above. Furthermore, there is required a high level of precision during the production of the angular elements 603 so that the engaging elements 601 and the engagement seats 602 have to be able to be connected perfectly to the engagement seats 602 and the engaging elements 601 which are provided in the panels, respectively.

### Statement of invention

The technical problem addressed by the present invention is therefore to provide a connection element for connecting to each other at least two panels, having a substantially rectangular profile, of a modular structure, which is structurally and functionally configured to overcome the disadvantages set out with reference to the cited prior art.

Within the scope of this problem, an object of the invention is to provide a connection element for connecting to each other at least two panels, having a substantially rectangular profile, of a modular structure, which is relatively economical to produce and which allows the assembly within a relatively rapid time of modular structures, in particular insulated or refrigerating cells.

Another object of the invention is to provide a modular structure, in particular an insulated cell, which has a reduced cost and a high level of mechanical strength and good thermal inertia.

Another object is to provide a modular structure which can be assembled in rapid times and in a simple manner.

This problem is solved and these objects are achieved by means of a connection element which is constructed according to the independent claims which are appended to the present description.

Preferred features of the invention are defined in the dependent claims.

Within the scope of the present description, the term "connection element" is intended to be understood to refer to a connection element which is intended to connect two panels having a substantially rectangular profile which are arranged perpendicularly to each other and which are intended to form two contiguous, perpendicular walls of a modular structure.

### Description of the drawings

The characteristics and additional advantages of the invention will be better appreciated from the following detailed description of a preferred though non-exclusive embodiment thereof which is illustrated by way of nonlimiting example with reference to the appended drawings, in which:
- Figures 1 and 2 are schematic views of two connection systems for panels according to the prior art;
- Figure 3 is a schematic, perspective view of a modular structure which is obtained by assembling panels which are connected to each other by means of a plurality of connection elements according to the invention;
- Figure 4 is a side view of the structure of Figure 3;
- Figure 5 is a cross-section of Figure 4 in accordance with the plane of section E-E;
- Figure 6 is a perspective, exploded broken-away view of a detail of the structure of Figure 3;
- Figure 7 is an enlarged view of the detail "B" of Figure 5;
- Figure 8 is an enlarged view of the detail "A" of Figure 3;
- Figure 9 is an enlarged view of a detail of the modular structure of Figure 3;
- Figure 10 is a schematic cross-section of a panel of the modular structure of Figure 3.

### Preferred embodiment of the invention

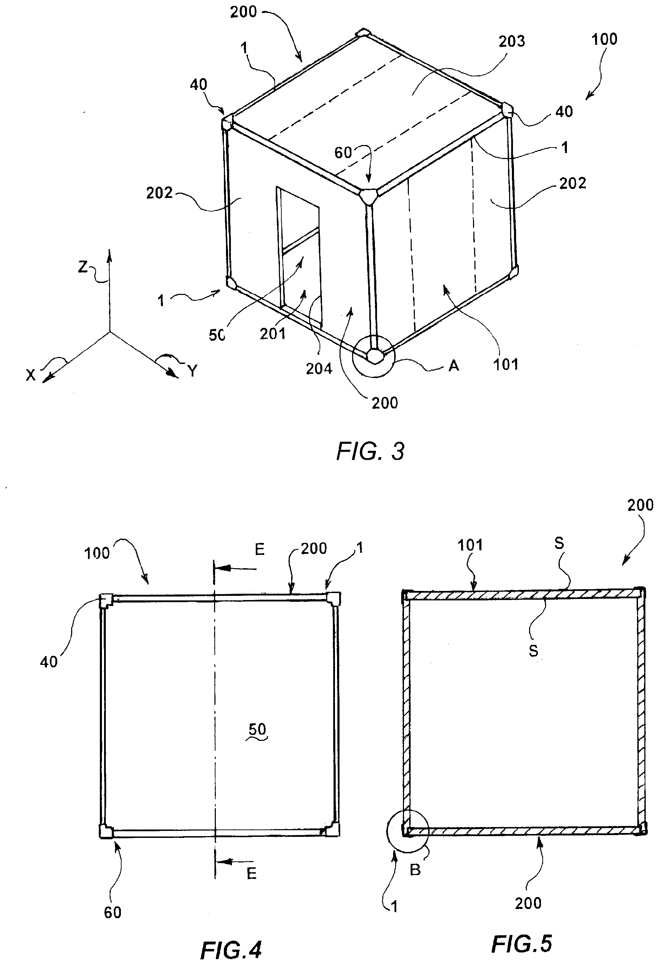

Initially with reference to Figure 3, a modular structure is designated with reference number 100, the modular structure 100 is constructed according to the invention and is provided with a plurality of walls 200 which are arranged so that two contiguous walls 200 are perpendicular to each other, as can better be seen in Figures 3 to 5.

Preferably, the modular structure 100 is in the form of a rectangular parallelepiped which is provided with 6 walls 200, the modular structure 100 is formed so as to define a housing 50.

In a Cartesian reference system XYZ, two walls 200 are parallel with the vertical axis Z, two walls 200 are parallel with the horizontal axis X and two walls 200 are parallel with the longitudinal axis Y.

The plurality of walls 200 comprise a base wall 201 which is intended to form the base, or floor, of the modular structure 100, 4 side walls 202 which define the 4 lateral walls of the modular structure 100 and an upper wall 203 which defines the roof of the modular structure 100.

In accordance with the dimensions, each wall 200 of the structure 100 can be formed by a single panel or by a plurality of panels 101, as indicated with broken lines in Figure 3, which are connected to each other by means of suitable connection joints.

Advantageously, as better explained below, the panels 101 of the same wall 200 are preferably connected by means of male/female form-fitting connection. The facing ends of two adjacent panels are respectively shaped as a male element and a female element which can be connected to each other with a form-fitting connection.

In the following description, for the sake of simplicity reference will be made to walls which are formed by a single panel, but the invention may also be applied equally well if one or more walls of the modular structure 100 is/are formed by a plurality of panels which are mutually connected.

The modular structure 100 further comprises a plurality of connection elements 1 which are produced according to the invention and which are arranged for mutually connecting the panels 101 of two contiguous walls 200 of the structure 100 which are arranged, as mentioned, perpendicularly to each other.

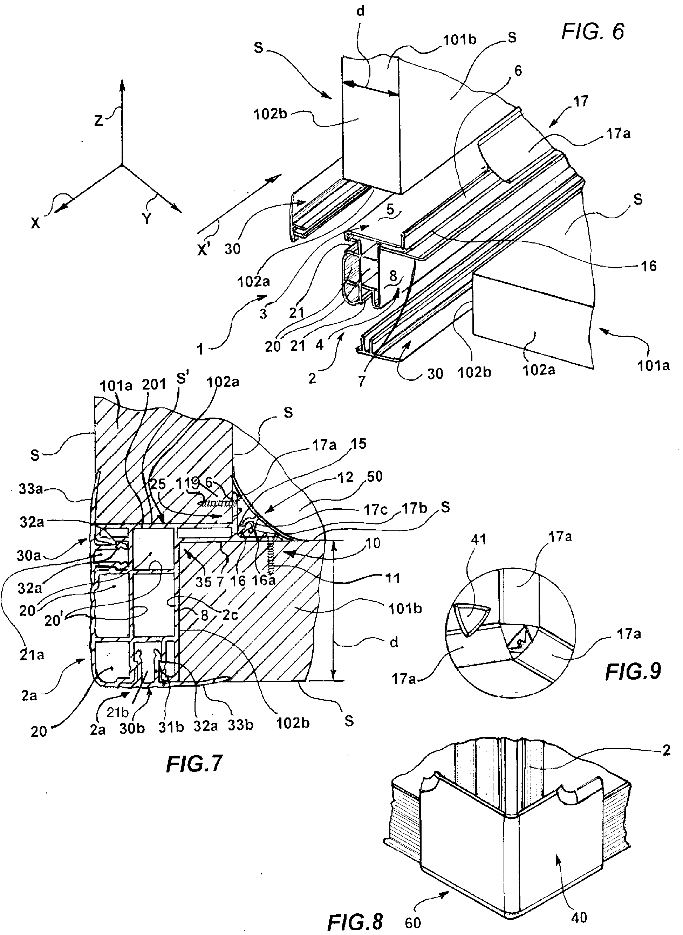

A connection element 1 according to the invention is shown in detail in Figures 6 to 9 and described in greater detail below.

The walls 200 of the modular structure 100 are arranged so as to define a closed housing 50 which is intended to receive and preserve products. One of the side walls 202 of the structure 100 is provided with a space 204 which is capable of receiving a door or similar structure in order to afford access to the housing 50 and to advantageously close the structure 100 in a hermetic manner.

Preferably, the modular structure 100 is a structure for storing foodstuffs at a temperature lower than ambient temperature, such as an insulated and/or refrigerating cell.

The panels 101 of each wall 200 are structurally similar to each other and therefore will be indicated with the same reference numerals.

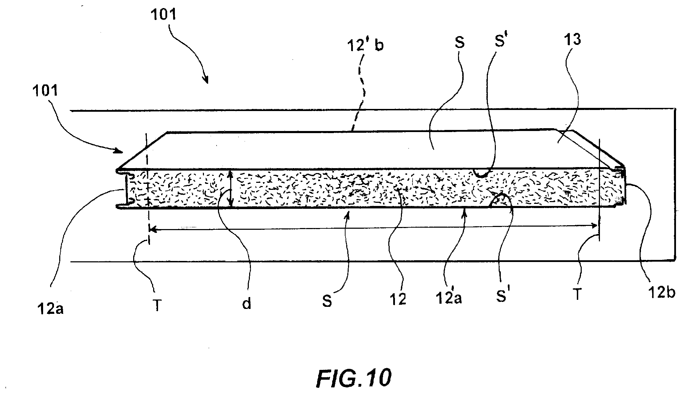

Each panel 101 which is shown in greater detail in Figure 10 is a plate-like element which is delimited by two opposing base surfaces "S", two pairs of shaped longitudinal edges 12a, 12b which are opposite each other.

Each base surface "S" of each panel 101 advantageously has a rectangular or square shape.

In the context of the present description, it may be noted that a plate-like element is intended to be understood to be an element having a prevalent two-dimensional extent with a thickness "d" which is relatively small, less than the two main dimensions.

The panels 101 of each wall 200 are thermally insulating panels so as to reduce the passage of heat therethrough.

Each panel 101 comprises a central portion 12 which is preferably constructed from expanded polyurethane or another material which is at the same time insulating and which allows the production of a stable and resistant panel. The central portion 12 is delimited by two pairs of shaped longitudinal edges 12a, 12b, 12'a, 12'b which are opposite each other and two opposing faces S'.

Each panel 101 is further provided with two metal sheets 13 which are positioned on each face S' of the central portion 12 for covering it and which are arranged so as to define the base surfaces "S" of each panel 101. The metal sheets 13 are shaped so as to also cover a portion of the thickness "d" of the panel 101 so as to be solidly engaged at the shaped longitudinal edges 12a, 12b of the central portion 12. The provision of the metal sheets 13 for covering the central portion 12 allows an increase in the structural resistance of each panel 101 and allows the modular structure 100 to be generally made more stable.

In particular, as better explained below, the presence of the metal sheets 13 allows the connection between the panels 101 and the connection elements 1 to be made more stable.

The metal sheets 13 preferably extend over the entire extent of each face S' of the central portion 12 and also at least partially along the longitudinal edges 12a, 12b.

As can better be seen in Figure 10, the opposing shaped longitudinal edges 12a, 12b of each panel 101 have a male and female shaping, respectively, so as to allow the interlocking connection of two adjacent panels.

The provision of the sheet 13 along the shaped longitudinal edges 12a, 12b allows the connection between two adjacent panels in the walls of the modular structure 100 to be made more stable.

Advantageously, the shaped longitudinal edge 12a or 12b which is intended to be connected to a connection element 1 in order to connect the panels 101 of two contiguous walls 200 of the modular structure 100 is cut at a non-peripheral portion thereof, as indicated by the dotted line "T" in Figure 10, so as to generate in the panel 101 two opposing non-shaped longitudinal edges 102a, 102b which are rectilinear, as can be seen in Figure 6.

In accordance with the arrangement of the panel 101, it is cut at one of the cutting lines "T" indicated in Figure 10.

This allows an increase in the stability of the connection of the panels 101 by means of the connection element 1.

In order to connect two contiguous perpendicular walls of the structure 100 so as to prepare the structure 100 itself, there is provision for connecting the panels 101a, 101b of two contiguous walls 200 of the structure 100 by means of a connection element 1 which is constructed according to the invention.

The connection element 1 is intended to connect contiguous panels 101a, 101b which are arranged perpendicularly to each other and which belong to two contiguous perpendicular walls 200 of the structure 100.

In a parallelepipedal structure 100, therefore, there will be present 12 connection elements 1 according to the invention, each one intended to connect two mutually perpendicular, contiguous walls 200.

The connection element 1 comprises a main body 2 which is box-shaped and which has a main longitudinal extent along an individual longitudinal axis X'. The main body 2 is shaped so as to define a first and a second engagement seat 3, 4 which seats extend longitudinally along the longitudinal axis X', which seats are intended to receive two separate contiguous panels 101a, 101b which are arranged perpendicularly to each other, as will be better explained below.

The main body 2 has an almost box-shaped form which is delimited by two external faces 2a, 2b, which define during use the external corners 2e of the modular structure 100 and two internal faces 2c, 2d which cooperate in order to define the first and the second engagement seats 3, 4, as will be better explained below.

Preferably, the main body 2 of the connection element 1 is constructed from plastics material, in particular PVC and is shaped so as to define a plurality of empty closed chambers 20 which are delimited by corresponding partition walls 20' and at least two locking chambers 21a, 21b which are open towards the outer side of the main body 2 so as to be accessible from the outer side, as will be better explained below.

The provision of connection elements 1 having a box-like structure with a plurality of chambers increases the total thermal insulation which can be obtained with the modular structure 100 of the invention, at the same time keeping simple the setting up operations for setting the modular structure 100 up.

The provision of connection elements 1 with chambers allows a reduction in the localized losses of heat at the connection element.

The provision of a plurality of chambers which are mutually separated by partition walls allows a further increase in this effect.

The connection element 1 also acts as an insulation element for the modular structure 100 in addition to act as an assembly element.

The provision of closed empty chambers 20 in the main body 2 of the connection element 1 reduces the passage of heat through the connection element 1, as will be better explained below.

The first and second locking cavities 21a, 21b are defined in the two perpendicular external faces 2a, 2b of the main body 2, or directed during use at opposite sides with respect to the panels 101a, 101b and the space defined by the structure 100.

Each locking cavity 21a, 21b has a "U"-shaped form which is delimited by two opposing side walls which are provided with a projection; each locking cavity 21a, 21b is intended to receive and retain locking elements 30a, 30b, as will be better explained below, in order to lock the panels 101a, 101b on the connection element 1. The provision of the locking chambers allows the locking of the panels 101 in the modular structure 100 to be made simple and rapid, as will be better explained below.

Each engagement seat 3, 4 of the connection element 1 is intended to receive the panel(s) of one of the two contiguous walls 200 to be connected by means of the connection element 1.

Advantageously, the first and the second engagement seats 3, 4 are L-shaped, that is to say, defined by two mutually perpendicular walls in order to engage in a more stable manner the panels which are intended to be connected.

The first engagement seat 3 comprises a first bear wall 5 which, in the reference system of Figure 6, is arranged parallel with a transverse plane XY, a first support wall 6 which is arranged perpendicularly to the support wall 5 and arranged parallel with a longitudinal plane XZ.
The first bear wall 5 and the first support wall 6 intersect in a first corner 25 and extend along the longitudinal axis X' which, in the reference system of Figure 6, is parallel with the axis X.

Similarly, the second engagement seat 4 comprises a second bear wall 8 which is arranged parallel with a longitudinal plane XZ and a second support wall 7 which is arranged perpendicularly to the second support wall 8 and is arranged parallel with a transverse plane XY:
The second bear wall 8 and the second support wall 7 intersect in a second corner 35 and extend along the longitudinal axis X' of the connection element which, in the reference system of Figure 6, is parallel with the axis X.

Advantageously, the engagement seats 3, 4 are formed so that the corner 25, 35 of each engagement seat 3, 4 is positioned at an intermediate portion of a wall 5, 6, 7, 8 of the other engagement seat 3, 4.

In other words, at least two parallel walls of each engagement seat 3, 4 are partially superimposed.

This allows an increase in the stability of the modular structure 100 obtained, as will be better described below.

Advantageously, the two parallel walls of each engagement seat 3, 4 are superimposed by a percentage between 30% and 60% of the extent of the wall 5, 6, 7, 8 itself.

This allows a further increase in the total stability of the modular structure 100.

The first bear wall 5 is intended to receive in a bearing manner the longitudinal edge 102a of a first panel 101b, the first support wall 6 being placed in contact with the base surface S of the panel 101b; while the second bear wall 8 is intended to receive in a bearing manner the longitudinal edge 102b of a second panel 101a which is positioned perpendicularly to the first panel 101b, the second support wall 7 being placed in contact with the base surface S of the panel 101a.

Since, as mentioned, at least two parallel walls of the engagement seats are partially superimposed, the panels which are connected to the connection element 1 are also partially superimposed.

This means that the panels cooperate in order to support the weight of the structure 100, and the weight of the structure is not completely borne by the connection elements 1 only.

Preferably, the panels fixed to the same connection element 1 are superimposed by approximately from 30% to 60% of the thickness "d" of the panel 101a.

This allows the production of a modular structure 100 which is more stable and prevents overloads on the connection elements 1.

Preferably, the width "L1" of the first and the second support walls 5, 8 is substantially equal to the thickness "d" of each panel 101 so that the longitudinal edges 102a, 102b can bear on the respective support walls 5, 8 in a stable manner.

This ensures a stable support of the panels 101.

The configuration of the connection element 1 of the invention allows two panels 101a, 101b which are arranged perpendicularly to each other to be connected in a reliable and rapid manner without the provision of hooks or special profiles of the panels. This results in a reduction of production costs for the panels and, consequently, the overall cost of the modular structure 100.

Preferably, the connection element 1 comprises fixing elements which are arranged to cooperate with fixing means in order to fix in a stable manner the panels to the connection element 1, thereby locking the longitudinal edges 102a, 102b in the respective engagement seat 3, 4.

This ensures a stable and lasting connection between the panels 101a, 101b by means of the connection element 1.

Preferably, the fixing elements are provided at the engagement seats 3, 4.

In the version shown, the fixing elements comprise one or more through-holes 9, 10 which are defined in the first and second support walls 6, 7 respectively of the first and second engagement seats 3, 4 and which are intended to receive corresponding screws 11, 12 in order to fix the panels to the connection element 1 in a stable manner.

The screws are inserted in the respective holes 9, 10 and screwed to the respective panel 101 in order to fix it to the connection element 1 in a stable manner.

Preferably, each support wall 6, 7 is provided with a plurality of through-holes 9, 10 suitably spaced apart along the longitudinal axis X' of the respective support wall 6, 7 and intended to receive corresponding screws 11 in order to fix the panels of the contiguous perpendicular walls 200 to the connection element 1 in a stable manner.

In other versions, there may be provided fixing means which are different from screws, for example, rivets, which are intended to be screwed or engaged in the panels 101a, 101b through the respective through-holes 9, 10.

This solution is found to be particularly suitable for rapid and easy assembly of the modular structure 100.

The fixing means 11 are dimensioned so as to extend from the through-holes through the metal sheet 13 and to reach the central portion 12 of the panel 101. The provision of the metal sheets 13 allows an increase in the strength of the fixing elements 11 and an increase in the fixing stability which can be obtained with the fixing elements 11.

The extension of the metal sheets 13 over practically the entire extent of each face S' of the central portion 12 allows the fixing over the entire panel to be made stable and the formation of weakening points to be prevented.

The fixing elements are provided on the first and second support walls 6, 7, that is to say, on the support wall which is intended to receive in a bearing manner the base surfaces "S" of each panel 101, that is to say, on the support wall which is intended to be directed during use towards the inner side of the housing 50.

As mentioned, the first and the second engagement seats 3, 4 have a cross-section which is substantially L-shaped. This characteristic is found to be particularly suitable for receiving panels 101 with a substantially rectangular profile.

In particular, the assembly of the modular structure 100 does not require the use of panels which are constructed ad hoc, that is to say, provided with special engaging means or a specific formation.

Advantageously, the connection element 1 according to the invention comprises a first and a second locking element 30a, 30b which are structurally independent of the main body 2 and which are intended to be connected with form-fitting connection to the first and the second locking cavities 21a, 21b, respectively.

Each locking element 30a, 30b is "T"-shaped and comprises a covering portion 33a, 33b and a locking portion 31a, 31b which extends perpendicularly with respect to the covering portion 33a, 33b.

The locking portion 31a, 31b is "U"-shaped and has such dimensions as to be connected with form-fitting connection to the locking cavity 21a, 21b.

Each locking portion 31a, 31b is provided on the opposing side walls thereof with a notch 32a, 32b which is arranged to be connected with form-fitting connection to the projection in order to engage the locking portion 31a, 31b in the locking cavity 21a, 21b.

In this manner, each locking element 30a, 30b can be removably connected in the corresponding locking cavity 21a, 21b.

Each locking element 30a, 30b has such dimensions that, when the locking portion 31a, 31b is connected in a snap-fitting manner in the recess 21a, 21b, the covering portion 33a, 33b is positioned in abutment against the external surface 2a, 2b of the main body 2 of the connection element 1 defining the external corner 2e of the structure 100 and also against the external surface "S" of the respective panel 101a, 101b which is engaged therewith.

The locking elements prevent a movement of the panels away from the connection element 1.

The provision of the locking elements 30a, 30b facilitates the engagement of the panels with the connection element 1 in order to prepare the structure 100.

It is in fact possible to readily arrange an edge of a panel 101a, 101b on the first or second engagement seat 3, 4 of the main body 2, to fix it by means of the fixing elements and subsequently to secure the panel 101a, 101b to the connection element 1 by inserting the relevant locking element 30a, 30b in the locking seat 21a, 21b of the main body 2 and engaging it therewith.

The engaging portions 31a, 31b and the side walls of each locking cavity 21a, 21b are preferably constructed from resilient material in order to make snap-fitting connection easier.

According to a preferred embodiment, the first and second support walls 6, 7 of the connection element are perpendicular to each other and incident in an internal corner 15 of the connection element 1 which is intended to be directed during use towards the housing 50 of the structure 100 and which defines the internal corner of the structure 100 itself.

There is provided on the internal corner 15 a protrusion 16 which projects from the internal corner 15 towards the housing 50. The protrusion 16 is provided with a body terminating in a mushroom-like head 16a. The protrusion 16 acts as a connection element in order to connect in a removable manner the main body 2 of the connection element 1 to a covering element 17, as will be better described below.

Advantageously, the covering element 17 is provided with a curved covering wall 17a which is intended to be positioned during use inside the housing 50 and shaped so as to be supported on two incident panels in an internal corner of the structure 100 so as to cover the corner itself.

The curved wall makes it easier to carry out cleaning operations on the space and prevents accumulations of deposits at the internal corners.

The provision of a covering element 17 which can be removably connected to the connection element 1 makes it possible to remove the covering element 17, if desired, for example, for more intensive cleaning than usual, or to replace the covering element 17, for example, in the event of damage, without having to disassemble the modular structure 100.

Furthermore, this allows the assembly operations of the modular structure 100 to be made easier, as will be better described below.

The covering element 17 further comprises a second connection element 17b which extends from the curved covering wall 17a in an opposite direction to the housing 50 and is arranged to allow stable engagement of the covering element 17 with respect to the main body 2 of the connection element.

The second connection element 17b comprises a pair of walls which define a receiving seat 17c for the mushroom-like head 16a of the protrusion 16.

The walls defining the receiving seat 17a are deformable so as to be able to mutually move apart in order to allow the insertion of the mushroom-like head 16a in the receiving seat 17c and to be re-closed on the mushroom-like head 16a in order to lock it in a stable manner in the receiving seat 17c.

The covering element 17 is shaped so as to extend over the entire longitudinal extent of the internal corner of the housing 50.

The covering element 17 is further shaped so as to cover the fixing means 11.

Vice versa, before the assembly of the covering element 17, the fixing means 11 are accessible and the fixing means 11 again become accessible by removing the covering element 17.

In order to prepare a modular structure 100 by using connection elements of the invention, initially there is prepared the base wall 201 of the modular structure 100, using, where necessary, a plurality of panels which are mutually engaged by means of the respective shaped longitudinal edges 12a, 12b.

Subsequently, four different connection elements 1 are engaged with the four edges of the base wall 201 by supporting the longitudinal edges of the panels 101 on one of the engagement seats 3, 4 defined on each connection element 1.

After connecting the connection elements 1 to the longitudinal edges 102 of the panels 101, they are mutually fixed by means of the fixing elements 9, 10.

The fixing means 11 are connected to the fixing elements in order to fix the panels 101 to the fixing elements 9, 10.

The fixing means 11 are inserted through the metal sheets 13 as far as the central portion 12. Subsequently, the panels 101 of the base wall 201 are locked on the respective connection elements 1 by inserting the locking elements 31 in the locking cavity 21a of the respective connection elements 1.

Therefore, it is provided for preparing the various side walls 202 of the structure 100. For each side wall 202, the panel(s) thereof is/are supported on the free engagement seat 3, 4 of the respective connection element 1.

In this case, the panels are also fixed by means of the fixing means 11 to the connection elements 1.

If the side walls 202 are formed by a plurality of panels, they are inserted and made to slide on the engagement seat 3, 4 of the connection element 1 until they are brought into abutment with the panel previously inserted so as to connect with form-fitting connection the respective longitudinal ends 12a, 12b or 12'a, 12'b.

Subsequently, the panels of the side walls 202 are fixed to the connection element 1, by means of the fixing elements 9, 10, and the connection elements are then locked by means of the locking elements 31.

Subsequently, there are connected additional connection elements 1 to the free longitudinal edges 102 of the panels of the side walls 202 by inserting them in one of the engagement seats of the connection elements 1 and they are fixed to these connection elements by means of the fixing elements 9, 10.

Therefore, it is provided for preparing the roof 203 of the modular structure 100 by associating the panels 101 with the connection elements 1, by inserting them in the free engagement seat of each connection element 1.

After preparing the roof, it is provided for inserting the locking elements 31 in the respective seats of the connection elements 1 in order to mutually lock the panels 101.

Therefore, there is obtained a modular structure in which the external corners are formed by the external surfaces of the connection elements.

There is obtained a modular structure comprising a plurality of panels having a central portion 12 of insulating material, for example, polyurethane foam, the opposing faces of which are covered with metal sheets 13, and a plurality of angular connection elements 1 which are arranged for mutually connecting two panels which are perpendicular to each other. The angular elements comprise a main body 2 with a main longitudinal extent along a development axis X', the main body 2 being provided with a first and a second wall 5, 8 which extend longitudinally along the axis X and which are arranged perpendicularly to each other, a first projection 6 arranged perpendicularly to the first wall 5 and joined thereto in a first corner 25 so as to delimit therewith an L-shaped engagement seat 3 which extends longitudinally along the axis X and which has dimensions for receiving and accommodating an end portion 102b of a first panel 101a, a second projection 7 which is arranged perpendicularly to the second wall 8 which is joined thereto in a second corner 35 so as to delimit therewith a second L-shaped engagement seat 4 which extends longitudinally along the axis X and which has dimensions for receiving and accommodating an end portion 102b of a second panel 101b, in which the first projection 6 and the second projection 7 are intended to receive a portion of base surfaces S of the first panel 101a and the second panel 101b and are provided with fixing elements 9, 10 in order to cooperate with fixing means 11 in order to fix the end portion 102a, 102b of each panel 101a, 101b to the first or second engagement seat 3, 4 by means of the base surface S.

The first projection 6 and the second projection 7 are positioned so as to be directed towards a housing 50 which is defined by the modular structure 100.

The first and the second walls 5, 8 are intended to receive in a supporting manner the longitudinal edge 102a, 102b of the first and second panels 101a, 101b, respectively.

Preferably, each connection element comprises a plurality of fixing elements 9, 10 which are spaced apart along the longitudinal axis of the connection elements 1 and which are intended to receive corresponding fixing means in order to fix the panels to the connection elements so as to increase the stability of the structure obtained.

The protrusions 16 of each connection element 1 are positioned so as to be directed towards a housing 50 which is defined by the modular structure.

Subsequently, there is provision for connecting the covering element 17 to the protrusion in order to cover the internal corner 15 and the fixing elements 11.

Subsequently, there is provision for applying to the vertices 40 of the modular structure 100 an external angular cover 60 which is intended to be associated with three connection elements of each vertex 40 in order to cover the external vertex of the structure 100.

The external angular cover, which can better be seen in Figure 8, can be fixed by means of screws or rivets.

As shown in Figure 9, in the region of the internal vertices of the structure 100, there is instead provision for applying an internal triangular cover 41 which is intended to cover each internal vertex.

The internal cover 41 is intended to be connected to the curved covering walls 17a which are provided on each internal corner.

The invention thereby solves the problem set, at the same time achieving a plurality of advantages. In particular, the connector according to the invention allows the problem of the relatively high costs of production and assembly of modular structures to be solved, in particular of insulated or refrigerating cells. Furthermore, the connector according to the invention allows the assembly operation of the above-mentioned modular structures to be made more rapid.

Furthermore, the assembly of the modular structure 100 of the invention is particularly simple and does not require the use of complex, dedicated equipment.

The formation of the connection elements 1 and the panels 101 allows the production of a modular structure 100 which is stable and at the same time with a high level of efficiency of thermal insulation.

## Claims

1. Connection element (1) adapted to connect to each other at least two panels (101), each panel being a plate-like element which is delimited by two opposing base surfaces "S" and two pairs of shaped longitudinal edges 12a, 12b which are opposite each other, and having a substantially rectangular profile, of a modular structure (100), preferably of insulated or refrigerating cells, said connection element (1) comprising:
• a main body (2) with a prevalent longitudinal extent along a development axis (X'), said main body (2) being provided with a first wall and a second wall (5, 8) which extend longitudinally along said axis (X) and which are arranged perpendicularly to each other, further comprising
• a first projection (6) which is arranged perpendicularly to the first wall (5) and which is connected thereto at a first corner (25) so as to delimit therewith an L-shaped engagement seat (3) which extends longitudinally along the axis (X) and which is dimensioned so as to receive and accommodate an end portion (102b) of a first panel (101a),
• a second projection (7) which is arranged perpendicularly to said second wall (8) and which is connected thereto at a second corner (35) so as to delimit with said second face (8) a second L-shaped engagement seat (4) which extends longitudinally along said axis (X) and which is dimensioned so as to receive and accommodate an end portion (102b) of a second panel (101b), wherein said first projection (6) and said second projection (7) are intended to receive a portion of the base surfaces (S) of the first panel (101a) and the second panel (101b) and are incident in an internal corner (45) of said connection element (1) and are provided with fixing elements (9, 10) in order to fix the end portion (102a, 102b) of each panel (101a, 101b) to the first or second engagement seat (3, 4) of the main body (2) of the connection element (1) by means of the base surface (S), the internal corner (15) being provided with a protrusion (16) for removably connecting a covering element (17) to the connection element (1) for covering the fixing means (11) received in the fixing elements (9, 10).

2. Connection element according to claim 1, wherein said first corner (25) is arranged in the region of an intermediate portion of said second projection (7) and said second corner (35) is arranged in the region of an intermediate portion of said first projection (6) in such a manner that said first engagement seat and said second engagement seat (3, 4) are partially superimposed, preferably over a portion between 30 and 60% of the thickness (d) of said first panel (101a) and/or second panel (101b).

3. Connection element according to any of the preceding claims, wherein the first projection (6) and the second projection (7) are provided with the plurality of fixing elements (9, 10) which are spaced apart along their respective longitudinal axis (X').

4. Connection element according to any one of the preceding claims, wherein said first and second projections (6, 7) are incident at an internal corner (15), the internal corner (15) being provided with a protrusion (16), the protrusion (16) projecting from said internal corner (15) and has a body which terminates in a mushroom-like head (16a) intended to receive in a removable manner a cover element (17) of said internal corner (15).

5. Connection element according to any one of the preceding claims, wherein said main body (2) is made from plastics material, preferably PVC, and it is shaped so as to define a plurality of chambers (20) which are closed and empty and delimited by corresponding partition walls (20').

6. Connection element according to the preceding claim, wherein said main body (2) is shaped so as to define at least two locking chambers (21a, 21b) which are delimited by a respective opening which is defined on two perpendicular external walls of said main body so that the locking chambers are accessible from the outer.

7. Connection element according to the preceding claim, wherein each locking chamber (21a, 21b) is U-shaped and is delimited by two opposing side walls which are provided with a projection which is intended to receive and retain locking elements (30a, 30b) in order to lock the panels (101a, 101b) to said connection element.

8. Modular structure comprising at least two panels (101a, 101b) having a substantially rectangular profile and which are connected to each other by means of a connection element (1) according to any one of the preceding claims.

9. Structure (100) according to the preceding claim, wherein each panel of the at least two panels comprises a central portion (12) of insulating material, preferably expanded polyurethane, and two metal sheets (13) which are connected to the central portion (12) and which are intended to form and two opposing faces (S) of the panels.

10. Structure (100) according to the preceding claim, and further comprising fixing means (11) intended to cooperate with the fixing elements (9, 10) of the connection element (1) in order to connect the at least two panels (101a, 101b) to the connection element (1), the fixing means (11) having such dimensions as to engage the metal sheet (13) and the central portion (12) of each panel (101).

11. Structure (100) according to the preceding claim, wherein the connection element is arranged in such a manner that the fixing elements (9, 10) are positioned on an internal wall of a housing (50) which is defined by the structure.

12. Insulated or refrigerating cell obtained by assembling a plurality of panels (101) having a substantially rectangular profile and which are connected to each other by means of at least one connection element (1) according to any one of claims 1 to 7.

13. Cell according to the preceding claim, wherein each panel (101) of said plurality of panels comprises a central portion (12) made of insulating material, preferably expanded polyurethane, and two metal sheets (13) which are coupled to said central portion (12) and which are intended to form two opposing faces (S) of said panels.

14. Cell (100) according to the preceding claim, and further comprising fixing means (11) intended to cooperate with the fixing elements (9, 10) of the connection element (1) in order to connect said at least two panels (101a, 101b) to said connection element (1), said fixing means (11) having such dimensions as to engage said metal sheet (13) and said central portion (12) of each panel (101).

15. Cell according to the preceding claim, and further comprising a cover element (17) which can be removably connected to a protrusion (16) of the connection element (1) and which is provided with a curved covering wall (17a) directed towards the housing (5) and having such dimensions as to cover said fixing means (11).

## Patentansprüche

1. Verbindungselement (1), das zum Verbinden zumindest zweier Paneele (101) miteinander eingerichtet ist, wobei jedes Paneel ein plattenartiges Element ist, das durch zwei gegenüberliegende Basisflächen "S" und zwei Paare geformter Längsränder (12a, 12b), die einander gegenüberliegen, begrenzt ist, und ein im Wesentlichen rechteckiges Profil aus einer modularen Struktur (100), vorzugsweise aus Isolier- oder Kühlzellen, aufweist, wobei das Verbindungselement (1) umfasst:
• einen Hauptkörper (2) mit einer überwiegenden Längserstreckung entlang einer Entwicklungsachse (X'), wobei der Hauptkörper (2) mit einer ersten Wand und einer zweiten Wand (5, 8) versehen ist, die sich in Längsrichtung entlang der Achse (X) erstrecken und die senkrecht zueinander angeordnet sind, ferner umfassend
• einen ersten Vorsprung (6), der senkrecht zur ersten Wand (5) angeordnet ist und der daran an einer ersten Ecke (25) verbunden ist, um damit einen L-förmigen Eingriffssitz (3) zu begrenzen, der sich in Längsrichtung entlang der Achse (X) erstreckt und der zum Aufnehmen und Unterbringen eines Endabschnitts (102b) eines ersten Paneels (101a) dimensioniert ist,
• einen zweiten Vorsprung (7), der senkrecht zur zweiten Wand (8) angeordnet ist und der daran an einer zweiten Ecke (35) verbunden ist, um mit der zweiten Fläche (8) einen zweiten L-förmigen Eingriffssitz (4) zu begrenzen, der sich in Längsrichtung entlang der Achse (X) erstreckt und der zum Aufnehmen und Unterbringen eines Endabschnitts (102b) eines zweiten Paneels (101b) dimensioniert ist, wobei der erste Vorsprung (6) und der zweite Vorsprung (7) zum Aufnehmen eines Abschnitts der Grundflächen (S) des ersten Paneels (101a) und des zweiten Paneels (101b) bestimmt sind und an einer Innenecke (45) des Verbindungselements (1) auftreffen und mit Befestigungselementen (9, 10) versehen sind, um den Endabschnitt (102a, 102b) jedes Paneels (101a, 101b) am ersten oder zweiten Eingriffssitz (3, 4) des Hauptkörpers (2) des Verbindungselements (1) mittels der Basisfläche (S) zu befestigen, wobei die Innenecke (15) mit einem Vorsprung (16) zum lösbaren Verbinden eines Abdeckelements (17) mit dem Verbindungselement (1) versehen ist, um die in den Befestigungselementen (9, 10) aufgenommene Befestigungseinrichtung (11) abzudecken.

2. Verbindungselement nach Anspruch 1, wobei die erste Ecke (25) im Bereich eines Zwischenabschnitts des zweiten Vorsprungs (7) angeordnet ist und die zweite Ecke (35) im Bereich eines Zwischenabschnitts des ersten Vorsprungs (6) derart angeordnet ist, dass sich der erste Eingriffssitz und der zweite Eingriffssitz (3, 4) teilweise, vorzugsweise über einen Abschnitt zwischen 30 und 60 % der Dicke (d) des ersten Paneels (101a) und/oder des zweiten Paneels (101b) überlagern.

3. Verbindungselement nach einem der vorhergehenden Ansprüche, wobei der erste Vorsprung (6) und der zweite Vorsprung (7) mit der Vielzahl von Befestigungselementen (9, 10) versehen sind, die entlang ihrer jeweiligen Längsachse (X') voneinander beabstandet sind.

4. Verbindungselement nach einem der vorhergehenden Ansprüche, wobei die ersten und zweiten Vorsprünge (6, 7) an einer Innenecke (15) auftreffen, die Innenecke (15) mit einem Vorsprung (16) versehen ist, der Vorsprung (16) von der Innenecke (15) vorragt und einen Körper aufweist, der in einem pilzartigen Kopf (16a) endet, der zum lösbaren Aufnehmen eines Abdeckelements (17) der Innenecke (15) bestimmt ist.

5. Verbindungselement nach einem der vorhergehenden Ansprüche, wobei der Hauptkörper (2) aus einem Kunststoffmaterial, vorzugsweise PVC, hergestellt ist und so geformt ist, dass dieser eine Vielzahl von Kammern (20) definiert, die geschlossen und leer sind, und durch entsprechende Trennwände (20') begrenzt sind.

6. Verbindungselement nach dem vorhergehenden Anspruch, wobei der Hauptkörper (2) so geformt ist, dass dieser zumindest zwei Verriegelungskammern (21a, 21b) definiert, die durch eine jeweilige Öffnung begrenzt sind, die an zwei senkrechten Außenwänden des Hauptkörpers definiert ist, sodass die Verriegelungskammern von der Außenseite zugänglich sind.

7. Verbindungselement nach dem vorhergehenden Anspruch, wobei jede Verriegelungskammer (21a, 21b) U-förmig ist und von zwei gegenüberliegenden Seitenwänden begrenzt wird, die mit einem Vorsprung versehen sind, der zum Aufnehmen und Halten von Verriegelungselementen (30a, 30b) bestimmt ist, um die Paneele (101a, 101b) am Verbindungselement zu verriegeln.

8. Modulare Struktur, umfassend zumindest zwei Paneele (101a, 101b), die ein im Wesentlichen rechteckiges Profil aufweisen und die mittels eines Verbindungselements (1) nach einem der vorhergehenden Ansprüche miteinander verbunden sind.

9. Struktur (100) nach dem vorhergehenden Anspruch, wobei jedes Paneel der zumindest zwei Paneele einen Mittelabschnitt (12) aus isolierendem Material, vorzugsweise geschäumtem Polyurethan, und zwei Metallbleche (13) umfasst, die mit dem Mittelabschnitt (12) verbunden sind und die zum Bilden zweier gegenüberliegenden Flächen (S) der Paneele bestimmt sind.

10. Struktur (100) nach dem vorhergehenden Anspruch, ferner umfassend eine Befestigungseinrichtung (11), die dazu bestimmt ist, mit den Befestigungselementen (9, 10) des Verbindungselements (1) zusammenzuwirken, um die zumindest zwei Paneele (101a, 101b) mit dem Verbindungselement (1) zu verbinden, wobei die Befestigungseinrichtung (11) solche Abmessungen aufweist, dass diese in das Metallblech (13) und den Mittelabschnitt (12) jedes Paneels (101) eingreift.

11. Struktur (100) nach dem vorhergehenden Anspruch, wobei das Verbindungselement derart angeordnet ist, dass die Befestigungselemente (9, 10) an einer Innenwand eines Gehäuses (50), das durch die Struktur definiert ist, positioniert sind.

12. Isolier- oder Kühlzelle, die durch Zusammenfügen einer Vielzahl von Paneelen (101) mit einem im Wesentlichen rechteckigen Profil erhalten wird und die mittels zumindest eines Verbindungselements (1) nach einem der Ansprüche 1 bis 7 miteinander verbunden sind.

13. Zelle nach dem vorhergehenden Anspruch, wobei jedes Paneel (101) der Vielzahl von Paneelen einen Mittelabschnitt (12) aus isolierendem Material, vorzugsweise geschäumtem Polyurethan, und zwei Metallbleche (13) aufweist, die mit dem Mittelabschnitt (12) verbunden sind und die dazu bestimmt sind, zwei gegenüberliegende Flächen (S) der Paneele zu bilden.

14. Zelle (100) nach dem vorhergehenden Anspruch, ferner umfassend eine Befestigungseinrichtung (11), die dazu bestimmt ist, mit den Befestigungselementen (9, 10) des Verbindungselements (1) zusammenzuwirken, um die zumindest zwei Paneele (101a, 101b) mit dem Verbindungselement (1) zu verbinden, wobei die Befestigungseinrichtung (11) solche Abmessungen aufweist, dass diese in das Metallblech (13) und den Mittelabschnitt (12) jedes Paneels (101) eingreift.

15. Zelle nach dem vorhergehenden Anspruch, ferner umfassend ein Abdeckelement (17), das mit einem Vorsprung (16) des Verbindungselements (1) lösbar verbunden werden kann und das mit einer gekrümmten Abdeckwand (17a) versehen ist, die zum Gehäuse (5) gerichtet ist und solche Abmessungen aufweist, dass diese die Befestigungseinrichtung (11) abdeckt.

## Revendications

1. Élément de connexion (1) adapté pour raccorder entre eux au moins deux panneaux (101), chaque panneau étant un élément en forme de plaque qui est délimité par deux surfaces de base opposées « S » et deux paires de bords longitudinaux façonnés (12a, 12b) qui sont opposés entre eux, et ayant un profil sensiblement rectangulaire, d'une structure modulaire (100), de préférence de cellules isolées ou de réfrigération, ledit élément de connexion (1) comprenant :
un corps principal (2) avec une étendue longitudinale prédominante le long d'un axe de développement (X'), ledit corps principal (2) étant prévu avec une première paroi et une seconde paroi (5, 8) qui s'étendent longitudinalement le long dudit axe (X) et qui sont agencées perpendiculairement entre elles,
comprenant en outre :
une première saillie (6) qui est agencée perpendiculairement à la première paroi (5) et qui est raccordée à cette dernière au niveau d'un premier coin (25) afin de délimiter avec elle un siège de mise en prise en forme de L (3) qui s'étend longitudinalement le long de l'axe (X) et qui est dimensionné afin de recevoir et de loger une partie d'extrémité (102b) d'un premier panneau (101a),
une seconde saillie (7) qui est agencée perpendiculairement à ladite seconde paroi (8) et qui est raccordée à cette dernière au niveau d'un second coin (35) afin de délimiter avec ladite seconde face (8), un second siège de mise en prise en forme de L (4) qui s'étend longitudinalement le long dudit axe (X) et qui est dimensionné afin de recevoir et de loger une partie d'extrémité (102b) d'un second panneau (101b), dans lequel ladite première saillie (6) et ladite seconde saillie (7) sont prévues pour recevoir une partie des surfaces de base (S) du premier panneau (101a) et du second panneau (101b) et sont incidentes dans un coin interne (45) dudit élément de connexion (1) et sont prévues avec des éléments de fixation (9, 10) afin de fixer la partie d'extrémité (102a, 102b) de chaque panneau (101a, 101b) au premier ou second siège de mise en prise (3, 4) du corps principal (2) de l'élément de connexion (1) au moyen de la surface de base (S), le coin interne (15) étant prévu avec une saillie (16) pour raccorder de manière amovible un élément de recouvrement (17) à l'élément de connexion (1) pour recouvrir les moyens de fixation (11) reçus dans les éléments de fixation (9, 10).

2. Élément de connexion selon la revendication 1, dans lequel ledit premier coin (25) est agencé dans la région d'une partie intermédiaire de ladite seconde saillie (7) et ledit second coin (35) est agencé dans la région d'une partie intermédiaire de ladite première saillie (6) de sorte que ledit premier siège de mise en prise et ledit second siège de mise en prise (3, 4) sont partiellement superposés, de préférence sur une partie représentant entre 30 et 60% de l'épaisseur (d) dudit premier panneau (101a) et/ou du second panneau (101b).

3. Élément de connexion selon l'une quelconque des revendications précédentes, dans lequel la première saillie (6) et la seconde saillie (7) sont prévues avec la pluralité d'éléments de fixation (9, 10) qui sont espacés le long de leur axe longitudinal (X') respectif.

4. Élément de connexion selon l'une quelconque des revendications précédentes, dans lequel lesdites première et seconde saillies (6, 7) sont incidentes au niveau d'un coin interne (15), le coin interne (15) étant prévu avec une saillie (16), la saillie (16) faisant saillie dudit coin interne (15) et a un corps qui se termine par une tête en forme de champignon (16a) prévue pour recevoir, de manière amovible, un élément de couvercle (17) dudit coin interne (15).

5. Élément de connexion selon l'une quelconque des revendications précédentes, dans lequel ledit corps principal (2) est réalisé à partir de matière plastique, de préférence du PVC, et est formé afin de définir une pluralité de chambres (20) qui sont fermées et vides et délimitées par des parois de séparation (20') correspondantes.

6. Élément de connexion selon la revendication précédente, dans lequel ledit corps principal (2) est formé afin de définir au moins deux chambres de verrouillage (21a, 21b) qui sont délimitées par une ouverture respective qui est définie sur deux parois externes perpendiculaires dudit corps principal de sorte que les chambres de verrouillage sont accessibles de l'extérieur.

7. Élément de connexion selon la revendication précédente, dans lequel chaque chambre de verrouillage (21a, 21b) est en forme de U et est délimitée par deux parois latérales opposées qui sont prévues avec une saillie qui est prévue pour recevoir et retenir des éléments de verrouillage (30a, 30b) afin de verrouiller les panneaux (101a, 101b) audit élément de connexion.

8. Structure modulaire comprenant au moins deux panneaux (101a, 101b) ayant un profil sensiblement rectangulaire et qui sont raccordés entre eux au moyen d'un élément de connexion (1) selon l'une quelconque des revendications précédentes.

9. Structure (100) selon la revendication précédente, dans laquelle chaque panneau des au moins deux panneaux comprend une partie centrale (12) de matériau isolant, de préférence du polyuréthane expansé, et deux feuilles métalliques (13) qui sont raccordées à la partie centrale (12) et qui sont prévues pour former et les deux faces (S) opposées des panneaux.

10. Structure (100) selon la revendication précédente, et comprenant en outre des moyens de fixation (11) prévus pour coopérer avec les éléments de fixation (9, 10) de l'élément de connexion (1) afin de raccorder les au moins deux panneaux (101a, 101b) à l'élément de connexion (1), les moyens de fixation (11) ayant des dimensions telles qu'ils mettent en prise la feuille métallique (13) et la partie centrale (12) de chaque panneau (101).

11. Structure (100) selon la revendication précédente, dans laquelle l'élément de connexion est agencé de sorte que les éléments de fixation (9, 10) sont positionnés sur une paroi interne d'un boîtier (50) qui est défini par la structure.

12. Cellule isolée ou de réfrigération obtenue en assemblant une pluralité de panneaux (101) ayant un profil sensiblement rectangulaire et qui sont raccordés entre eux au moyen d'au moins un élément de connexion (1) selon l'une quelconque des revendications 1 à 7.

13. Cellule selon la revendication précédente, dans laquelle chaque panneau (101) de ladite pluralité de panneaux comprend une partie centrale (12) réalisée avec un matériau isolant, de préférence du polyuréthane expansé, et deux feuilles métalliques (13) qui sont couplées à ladite partie centrale (12) et qui sont prévues pour former deux faces (S) opposées desdits panneaux.

14. Cellule selon la revendication précédente, et comprenant en outre des moyens de fixation (11) prévus pour coopérer avec les éléments de fixation (9, 10) de l'élément de connexion (1) afin de raccorder lesdits au moins deux panneaux (101a, 101b) audit élément de connexion (1), lesdits moyens de fixation (11) ayant des dimensions telles qu'ils mettent en prise ladite feuille métallique (13) et ladite partie centrale (12) de chaque panneau (101).

15. Cellule selon la revendication précédente, et comprenant en outre un élément de couvercle (17) qui peut être raccordé, de manière amovible, à une saillie (16) de l'élément de connexion (1) et qui est prévu avec une paroi de recouvrement incurvée (17a) dirigée vers le boîtier (5) et ayant des dimensions telles qu'elle recouvre lesdits moyens de fixation (11).
